# EUROPEAN PATENT SPECIFICATION

(11) **EP 2 867 751 B1**
(45) Date of publication and mention of the grant of the patent: **31.07.2019**
(21) Application number: 13810268.6
(22) Date of filing: 28.06.2013
(51) Int. Cl.: G06F 3/033, B60W 50/14

(54) **SYSTEMS AND METHODS FOR EXECUTING ONE OR MORE VEHICLE FUNCTIONS USING AN ASSOCIATION BETWEEN VEHICLE FUNCTIONS**
SYSTEME UND VERFAHREN ZUR AUSFÜHRUNG EINER ODER MEHRERER FAHRZEUGFUNKTIONEN UNTER VERWENDUNG EINER ASSOZIATION ZWISCHEN FAHRZEUGFUNKTIONEN
SYSTÈMES ET PROCÉDÉS D'EXÉCUTION D'UNE OU DE PLUSIEURS FONCTIONS DE VÉHICULE AU MOYEN D'UNE ASSOCIATION ENTRE DES FONCTIONS DE VÉHICULE

(30) Priority: 29.06.2012 US 201213537923
(43) Date of publication of application: 06.05.2015
(73) Proprietor: Harman International Industries, Inc., Stamford, CT 06901 (US)
(72) Inventor: GOPINATH, Sreejit, Bangalore Karnataka 650037 (IN)
(74) Representative: Westphal, Mussgnug & Partner Patentanwälte mbB
(86) International application number: PCT/US2013/048396
(87) International publication number: WO 2014/004942

(56) References cited:
- DE-A1- 19 941 956
- US-A1- 2003 074 112
- US-A1- 2004 143 372
- US-A1- 2008 147 245
- US-A1- 2008 261 643
- US-A1- 2009 164 473
- US-A1- 2011 158 125
- US-A1- 2011 158 125
- US-A1- 2011 263 293
- US-A1- 2012 030 627
- US-A1- 2012 065 815

## Description

### TECHNICAL FIELD

Various embodiments relate to using a vehicle computing system. In some embodiments, one or more functions or applications on a vehicle computing system may be executed using an association with other vehicle applications.

### BACKGROUND

Automotive manufacturers are continuously increasing the number of functions within a vehicle that are at the vehicle user's disposal. Many of these enhancements are a result of the automotive OEMs responding to market needs and customer demands, state and federal laws, and competitive pressures, among other factors. So long as such factors persist, OEMs will continue to respond accordingly with further enhancements to the offerings in a vehicle. Some OEMs have responded by enabling the most commonly used functions to be statically displayed on a head unit. For example, a portion or portions of the display may be reserved with an icon or other identifier representing the commonly used function(s), which the user may select to execute the function(s) (e.g., a shortcut). In some cases, the OEM defines the shortcut(s) and the user is restricted to using the shortcuts made available by the OEM.

Document DE 199 41 956 A1 discloses a multifunctional control element including a display, selection keys and function keys for controlling a plurality of devices in a vehicle.

Document US 2012/0030627 A1 discloses an apparatus comprising at least one processor and at least one memory including computer program code. The at least one memory and the computer program code are configured, with the at least one processor, to cause the apparatus at least to store an identifier associated with a first application-type data item that is caused to be displayed during execution and display of a first application, and, subsequent to removing the first application from the display, when executing a second application, automatically to cause a second application-type data item associated with the stored identifier to be displayed or automatically to cause to be displayed a selectable option, the selectable option being for causing a second application-type data item associated with the stored identifier to be displayed.

### SUMMARY

The invention relates to a system and computer.implemented method as defined in claims 1 and 8. The system includes at least one vehicle computing system configured to receive input associating one or more functions in a vehicle with at least one of one or more contacts or one or more other vehicle functions in order to select the one or more vehicle functions for execution. Further, one or more vehicle functions are associated with at least one of the one or more contacts or the one or more other vehicle functions based on the input.

The vehicle computer is further configured to display the one or more vehicle functions which are associated with the one or more contacts or with the one or more other vehicle functions. A selection is received of the one or more vehicle functions which are associated with at least one of the one or more contacts or the one or more other vehicle functions. The one or more vehicle functions are executed at the vehicle computer in response to the selection while an application associated with the one or more contacts or the one or more other vehicle functions is running on the at least one vehicle computing system.

In some embodiments, upon execution of the one or more vehicle functions, the one or more contacts or the one or more other vehicle functions associated with the executing vehicle function may be displayed at the vehicle computer. In some embodiments, a user may select a selectable button in communication with a head unit display to display the association.

In some embodiments, one or more associations may be stored between the one or more vehicle functions and at least one of the one or more contacts or the one or more other vehicle functions. The one or more stored associations may be displayed at the vehicle computer. The selection of the one or more vehicle functions may be from the one or more stored associations.

In some embodiments, an identifier may be stored identifying an association between the one or more vehicle functions and the one or more contacts or the one or more other vehicle functions. The identifier may be displayed on or near a selectable button of the vehicle computing system. In response to a user selection of the selectable button, the one or more contacts or the one or more vehicle functions may be displayed at the vehicle computing system.

A computer-implemented method for selecting one or more vehicle functions for execution in a vehicle includes displaying at a vehicle computing system one or more vehicle functions having an association with one or more contacts or one or more other vehicle functions. Input is received at the vehicle computing system selecting the one or more vehicle functions having the association. In response to the input, the one or more vehicle functions are executed at the vehicle computing system.

In some embodiments, input may be received at the vehicle computing system to display the one or more vehicle functions having the association with the one or more contacts or the one or more other vehicle functions. One or more functions may be displayed at a vehicle computer while the one or more other vehicle functions are executing. In some embodiments, two or more functions may concurrently execute at the vehicle computing system in response to the input while an application associated with the one or more contacts or the one or more other vehicle functions is running on the vehicle computing system.

In some embodiments, tactual or oral input may be received at the vehicle computing system which associates the one or more vehicle functions with at least one of the one or more contacts or the one or more other vehicle functions. The one or more vehicle functions may be associated with the one or more contacts or the one or more other vehicle functions based on the input. The association may be between the one or more vehicle functions and any of the other one or more vehicle functions in the vehicle. Further, the association may be between the one or more contacts and any number of the one or more vehicle functions. In some embodiments, the association may be between a contact and two or more vehicle functions.

In one non-limiting example of using an association between functions, after terminating a telephone call, a message may be automatically output with respect to executing one or more other vehicle functions associated with the telephone function and to the contact. The one or more other vehicle functions may include, but are not limited to, navigating to the contact, playing the contact's playlist, viewing images of the contact, emailing the contact, or text messaging the contact.

A computer-implemented method for selecting one or more vehicle functions for execution in a vehicle may include executing a vehicle function on a vehicle computing system. The executing vehicle function may have an identifier identifying an association between the executing vehicle function and one or more other vehicle functions. Instructions may be received based on the identifier to display the one or more other vehicle functions associated with the executing vehicle function. The one or more other vehicle functions may be displayed at the vehicle computing system in response to the instructions.

Input selecting the one or more other vehicle functions may be received at the vehicle computing system and the one or more other vehicle functions may be executed in response to the input.

In some embodiments, the identifier may be one or more contacts. In some embodiments, the association may be created automatically. In some embodiments, the association may be created based on information downloaded from an Internet based service.

### BRIEF DESCRIPTION OF THE DRAWINGS

The figures identified below are illustrative of some embodiments of the invention. The figures are not intended to be limiting of the invention recited in the appended claims. The embodiments, both as to their organization and manner of operation, together with further object and advantages thereof, may best be understood with reference to the following description, taken in connection with the accompanying drawings, in which:
FIGURE 1 illustrates a block architecture of a vehicle computing system;
FIGURE 2 is a process for creating an association between vehicle functions, or a tag, for use in executing one or more vehicle functions;
FIGURE 3 is a process for presenting one or more tags associated with one or more vehicle applications in a vehicle;
FIGURE 4 is a process for automatically creating tags for use in executing one or more vehicle applications;
FIGURE 5 is a process for executing one or more applications using a tag ;
FIGURE 6 shows screen displays of using tags in order to execute one or more of the vehicle applications; and
FIGURE 7 illustrates an additional process for creating an association or tag according to one of the various embodiments.

### DETAILED DESCRIPTION

Detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention. Additionally, the disclosure and arrangement of the figures is non-limiting. Accordingly, the disclosure and arrangement of the figures may be modified or re-arranged to best fit a particular implementation of the various embodiments of the invention.

As vehicles become more complex with respect to the technology offerings in the vehicle, convenience and ease of use should not be sacrificed. Technology offerings today make vehicles more like a mobile home or office as opposed to simply a mode of transportation. In this environment, vehicle users should be able to conveniently use and switch between multiple applications seamlessly. Particularly with the increase in the type of communication that occur in a vehicle, maneuvering through multiple screens, pushing multiple buttons, and instructing various commands can be overwhelming, especially when the car is in motion. Further, vehicle users may use more functions in a vehicle than others and/or may use different functions at different time. In this regard, the user should be able to create shortcuts for any number and type of function offered in a vehicle.

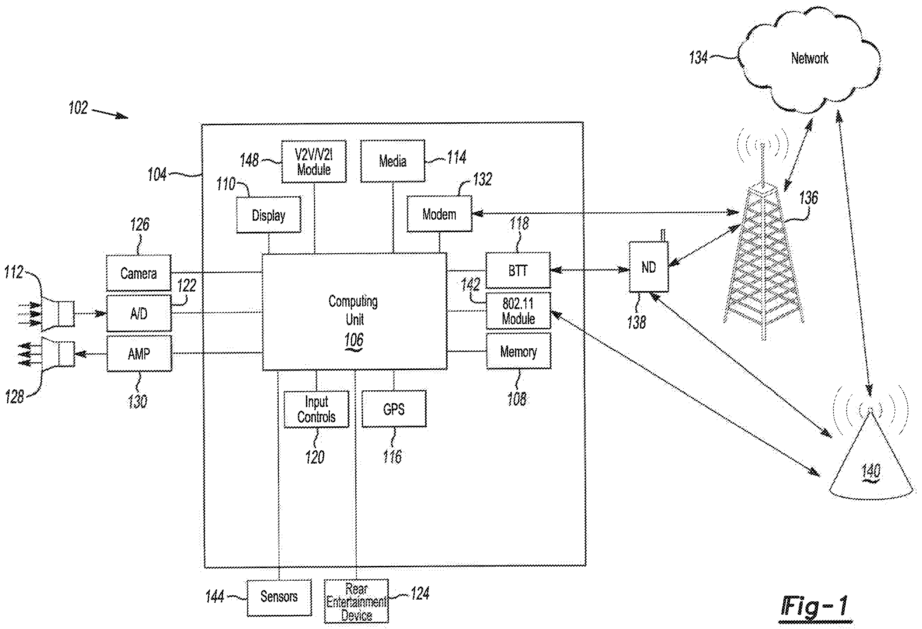

Figure 1 is a block diagram of a vehicle computing system (VCS) 102. Within the vehicle, a head unit 104 may have a computing unit 106 having one or more processors (not shown) that provide for on-board processing of instructions and controls received by the VCS 102. Data that may be received and processed by the processor 106 may be stored in memory 108. The memory 108 may include non-persistent or volatile memory, such as (and without limitation) random access memory (RAM), and persistent or non-volatile memory, such as (and without limitation) a hard disk drive (HDD) or flash memory.

The head unit 104 may also include a visual front end interface, such as a display 110, located in the vehicle. The display 110 may be an LCD display or a graphical display. In some embodiments, the interface may have a touch sensitive screen. In additional or alternative embodiments, the interaction with the VCS 102 may occur through, button presses, audible speech and/or speech synthesis and displayed on display 110.

The VCS 102 is also provided with a number of different modules through which the user can interface or interact with the VCS 102. For example, the vehicle may be provided with a microphone 112, one or more media components 114 (e.g., and without limitation, one or more input modules, such as, and without limitation, an auxiliary input or USB input for connected devices, a radio, a CD/DVD player, satellite radio, and the like), a GPS module 116, and a BLUETOOTH module 118. Additional media components may include one or more rear entertainment devices 124. The rear entertainment device 124 may include one or more media players (e.g., a DVD player) and one or more displays visible to rear seat passengers from which video, picture and/or audio may be output.

The computing unit 106 may be in communication with a vehicle network (not shown) that communicates data to and from the various modules. Non-limiting examples of a vehicle network include an SAE J1850 bus, a CAN bus, a GMLAN bus, and any other like vehicle data buses. The vehicle network may additionally or alternatively be a network for use with infotainment systems such as a media oriented system transport (MOST), Ethernet, or an Audio-Video Bridge (AVB) network.

Additional modules of the VCS 102 may include one or more vehicle cameras 126. The vehicle cameras 126 may be front or rear view cameras and/or in the vehicle. For purposes of simplicity, a single camera 126 is shown at the front of the vehicle. The output of the camera(s) 126 may be presented on the display 110 and/or on one or more rear-entertainment devices 126.

One or more input controls 120 may also be provided to allow a user to swap between and activate various modules. Signals passing from the microphone 112 may pass through one or more analog-to-digital converters 122 before being passed to the processor 106 and vice-versa. Additionally, signals to and from some media components 114 (e.g., AM/FM radio) may also pass through one or more A/D converters 122 before being passed to or from the processor 106. For purposes of simplicity, one A/D converter 122 is shown. However, multiple A/D converters 122 may be arranged in the system 102.

The output from one or more vehicle modules of the VCS 102 may be audible and/or visual output. Audible output may be output from one or more in-vehicle speakers 128. The speaker(s) 128 may be connected to an amplifier 130 and may receive its signal from the processor 106. In some cases, the signals may pass through a digital-to-analog (D/A) converter (not shown). Visual outputs may be output on the display 110 and/or on one or more rear entertainment devices 124.

The vehicle 10 may include an on-board modem 132 for two-way communication of data and messages between the vehicle and an external network 134. As a non-limiting example, modem 132 may be a USB cellular modem. As an alternative example, the modem may be an embedded modem in the vehicle. The data and messages may be exchanged by communicating with the one or more cellular towers 136.

Alternatively, via a BLUETOOTH transceiver 118 in the vehicle, a communication or pairing may be made automatically with a user's portable (sometimes referred to as "nomadic") device 138 (e.g., mobile phone, smart phone, PDA, or any other device having wireless remote network connectivity) after a vehicle key-on. In some embodiments, pairing the portable device 138 and the BLUETOOTH transceiver 118 may be instructed through one or more buttons or similar input (not shown). The one or more buttons may be one or more hard keys located in the vicinity of the vehicle driver (e.g., and without limitation, on the steering wheel, in the center console, or near the display 110) and/or one or more soft keys shown on the display 18. The soft keys may or may not be touch-sensitive (e.g, on a touchscreen display). Additionally or alternatively, the soft keys may be one or more physical buttons mapped to the one or more soft keys.

In yet an alternative embodiment, connectivity may be accomplished using a USB connection linking the nomadic device 138 with the head unit 104 via a USB module. In some embodiments, this connection may only be enabled using an accessory protocol. Non-limiting examples of accessory protocols include the IPHONE accessory protocol or the ANDROID accessory protocol.

Using the portable device 138, communication with an external network 134 may be accomplished through, for example, communication with a cellular tower 136 and/or a wireless access point 140. Data may be communicated from the vehicle (e.g., from the processor 106) to the network 134 utilizing, for example, a data-plan, data over voice, or DTMF tones associated with nomadic device 54.

Additionally or alternatively, the vehicle 10 may be outfitted with one or more wireless modules 142 for wireless communication with the network 134. A non-limiting example of such a wireless communication is any communication system meeting the 802.11 IEEE standard such as WiFi or WiMax. To communicate with the network 134, a connection may be made to a wireless hotspot 140 (or wireless access point) which may be outside and remote from the vehicle (e.g., and without limitation, at a publically available hotspot venue). In some embodiments, a wireless hotspot may be created in the vehicle and communication with the network 134 may be accomplished by wirelessly connecting one or more compatible devices in the vehicle with the in-vehicle wireless access point. For purposes of simplicity and clarity, Figure 1 shows an external hotspot 140.

The processor 106 may be provided with an operating system including an API to communicate with modem application software. The modem application software may access an embedded module or firmware on the BLUETOOTH transceiver 118 to complete wireless communication with a remote BLUETOOTH transceiver (such as that found in a nomadic device).

The nomadic device 138 may be capable of voice band and/or broadband data communication. A user may be able to transfer data over the voice band using a technique called frequency division multiplexing. Thus, a user of the nomadic device 138 may be able to talk over the device while data is being transferred. If the user has a dataplan associated with the nomadic device 138, broadband transmission may be possible.

Incoming data to the VCS 102 may be passed through the nomadic device 138 via a data-over-voice or data plan through the onboard BLUETOOTH transceiver 118 and into the vehicle's internal processor 106. Alternatively, the data may be passed through the embedded modem 132 via cellular communication to the processor 106. Alternatively, the data may be passed through the wireless module 142 via, e.g., a WiFi connection, to the processor 106. Data may be stored in the memory 108 of the VCS 102.

Additional sources that may interface with the VCS 102 may include personal navigation device, vehicle navigation device, onboard GPS devices, or remote navigation systems having connectivity to network 134. Further, the processor 106 could be in communication with a variety of other auxiliary devices connected through a wireless or wired connection. Auxiliary devices may include, but are not limited to, personal media players, wireless health devices, portable computers, and the like.

Additionally communicating with the computing unit 106 may be one or more interior sensors 144a, 144b...144n (generally referred to herein as interior sensors 144) and one or more exterior sensors (generally referred to herein as exterior sensors). Interior sensors 144 may monitor one or more vehicle components for vehicle concerns. Exterior sensors may monitor events outside of the vehicle. As one non-limiting example, exterior sensors may be proximity sensors for detecting objects near the vehicle.

From the head unit 104, a vehicle user may be able to use an association between one or more contacts of the vehicle user and the applications in the vehicle to complete a number of operations on the vehicle applications. As non-limiting examples, the user may call or text a contact, navigate to a contact, email a contact, view photos of a contact, and/or play a contact's playlist. At least one application can be selected and loaded for execution while a different application is also executing, which can be done with minimal or no screen maneuvering based on a selection of one or more contacts associated with the one or more applications. In some cases, as described below, the display may be changed based on the application that is selected for execution, but the execution of the currently executing application may or may not be terminated or be suspended. In some embodiments, when the application is selected, the selected application and the loaded application may execute concurrently. As a non-limiting example, while navigation to a contact's location may be executing, the vehicle user may also select the contact's playlist to play in the vehicle, call the contacts, email the contact, or perform other operations as will be described below. While the various embodiments are described in the context of vehicle applications, the embodiments can also be used in other contexts, such as (and without limitation) in mobile phones, tablets, personal computers, and the like, based on the particular implementation of the invention.

In various embodiments, an association between vehicle applications (also referred to as functions) is created and used to execute one or more vehicle applications. As described herein, the association can be a vehicle user's one or more contacts. In this context, the one or more vehicle functions, once selected, can also be executed based on the association. For example, a vehicle user can be navigated to a contact, play a contact's playlist, call a contact, email a contact, text message a contact, and the like. Additionally or alternatively, the association can be created for enabling access and selection of a vehicle function while executing another vehicle function. The association can be identified by a named identifier which may be defined by the vehicle user. The named identifier may be comprised of letter, numbers, or a combination of letters and numbers.

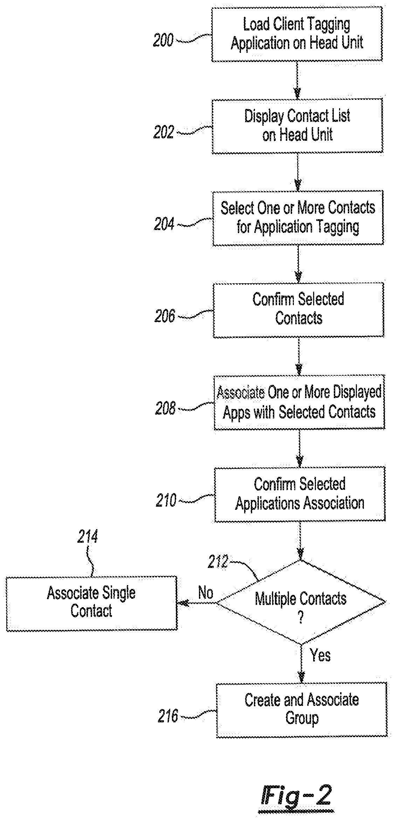

Figure 2 illustrates a process for associating one or more vehicle applications with one or more contacts. A client application for associating the one or more vehicle applications and the contacts, and executing applications based on the association, may be loaded and running from the head unit 104. The client application may be software installed by a user before or after the purchase of the vehicle. Alternatively, the logic for creating and using the associations may be programmed to and embedded on the head unit 104.

The association between the vehicle applications and the contacts may be established by tagging (or linking) the one or more contacts with the one or more vehicle functions. Once established, the tags are stored in memory 108 of the VCS 102. By selecting a contact, the one or more vehicle applications associated with the contact are displayed to the vehicle user based on the linking information (i.e., tags) stored in memory.

Applications can also be tagged to other applications. As a non-limiting example, navigation can be associated with a contact list. As another example, an image viewer can be associated with the media player.

The client application may be loaded on the head unit (block 200). The application may be loaded at vehicle key on or start up automatically or in response to a user command received orally and/or tactually or haptically. In some embodiments, a client application may be executing on the nomadic device 138 which can be used to create the associations and, when connected to the head unit 104 in the vehicle (e.g., via a BLUETOOTH connection), transfer the associations to the head unit 104 for use in the vehicle via the client application on the head unit 104. Of course, the associations can also be used on the nomadic device 138 when not connected to the vehicle head unit 104. In additional or alternative embodiments, the associations can be created remote from the vehicle (e.g., at a personal computer) and transferred to the head unit 104 wirelessly (e.g., over the Internet) and/or using wired communication (e.g., and without limitation, storing on a USB flashdrive). As described herein, for purposes of clarity and without limitation, the various embodiments relating to creating the association are described as occurring on the head unit 104.

The vehicle user's contact list may be displayed on the head unit display 110 (block 202). As used herein, a vehicle user is any vehicle occupant. The contacts may be stored on the head unit 104 (and retrieved from memory 108) or transmitted to the head unit 104 from a connected nomadic device 148, e.g., using one or more BLUETOOTH protocols, and temporarily stored in memory 108.

One or more contacts from the displayed contacts for application tagging (or associating the one or more contacts with the one or more vehicle applications) may be selected by the vehicle user (block 204). The one or more contacts may be selected individually and individually associated with one or more applications. Alternatively or additionally, multiple contacts may be selected as a group from the contact list and the group of contacts associated with the one or more vehicle applications. After the contact(s) are selected, the selection(s) may be confirmed (block 206). Confirmation may be accomplished through oral and/or tactual input (e.g., one or more presses of a graphical, soft and/or hard input). Confirmation may include, but is not limited to, accepting the selections in response to a confirmation notification and/or moving to another step of the association creation process.

The selected contact(s) may be associated or tagged with one or more vehicle applications (block 208). The available vehicle applications may be displayed on the head unit 104 and the one or more applications for associating with the selected contacts selected. Selection may occur orally and/or tactually. Upon selection of the one or more applications, the selection(s) may be confirmed (block 210). Confirmation may be accomplished through oral and/or tactual input (e.g., one or more presses of a graphical, soft and/or hard input). Confirmation may include, but is not limited to, accepting the selections in response to a confirmation notification and/or moving to another step of the association creation process.

Upon confirmation of the selected application(s), the client application on the head unit 104 may establish the association between the contact(s) and the application(s) and store the association in memory 108. In some embodiments, the vehicle user may manually instruct the association. For example, the vehicle user may orally and/or tactually input a command to associate the contacts and the applications. The oral command may be "tag contacts." A tactual command may read "tag contacts." Of course, other like grammars or names for tactual commands may be used without departing from the scope of the invention.

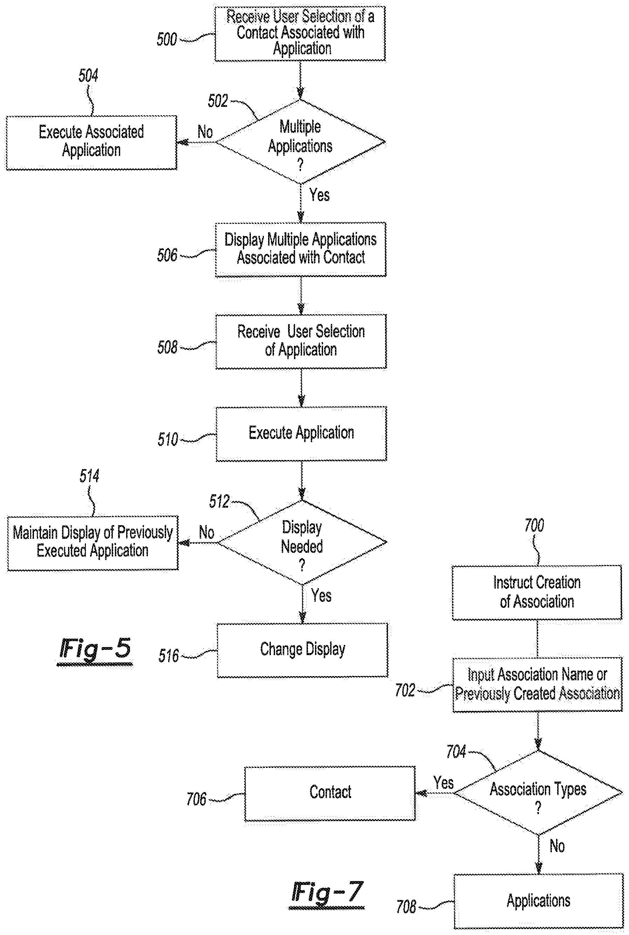

In some embodiments, an association between contacts and applications can be added to previously established associations or new associations may be created. For example, additional applications can be associated with a contact or contact group that has already been created or a new contact or contact group can be created and associated with the one or more applications. As another non-limiting example, tags associating applications to other applications can be modified or updated to add additional applications or new tags may be created with new associations between applications. Referring to Figure 7, after the client application is loaded, the user may input a command to tag/associate contacts or applications (block 700). To make the association, the user may input an association or tag name (e.g., and without limitation, named as "Tag 1") (block 702) and, once saved, the user may select whether to create an association between contacts and applications or applications and other applications (block 704). Additionally or alternatively, the user may select a previously created tag (block 702) from which it is determined whether it is a tag with contact associations or application associations (block 704). In some embodiments, the number of previously created tags may be limited in order to limit interference with driving. If the association type is contacts, then the contacts and applications are associated (block 706). Otherwise, if the association type is applications, then applications are associated to other applications (block 708). For purposes of clarity, the various embodiments are described in the context of associations between contacts and applications. However, the various embodiments can also be applied to an association between applications.

Referring back to Figure 2, in some embodiments, where multiple contacts are associated with one or more applications, the multiple contacts may be grouped together and the group may be associated with the one or more applications. Grouping multiple contacts together is beneficial because it streamlines the interface display 110. An additional benefit is that grouping the contacts streamlines execution of the one or more vehicle application operations. For example, the vehicle user can select the group, in which each individual contact within the group is associated with the one or more applications based on the group association, and the one or more applications can be executed with reference to each contact in the group. This may be particularly advantageous where, for example, the vehicle user wants to play a playlist associated with each of the multiple contacts. When the media player application is selected (after the association between the contact group and the media player application is made), the client application may transmit a set of instructions to play each contact's playlist. As another non-limiting example, the vehicle user may want to make a call to multiple contacts. The client application can instruct automatic calling of each individual in the group so that the vehicle user is not required to select each contact individually in order to make a call. For example, the client application may execute instructions to call another person in the group if a previous call to a person in the group goes unanswered or the previous call terminates. The instructions may be executed automatically and/or in response to user instructions.

If multiple contacts are not associated with the one or more applications (block 212), a single contact may be associated with the one or more applications (block 214). If multiple contacts are associated with the one or more applications, a contact group may be created and associated with the applications(s) (block 216). The single contact or the contact group may be displayed with an identifier on the display (e.g., and without limitation, a contact/group name and/or an icon). The identifier may be selectable so that that the vehicle user may view the contact(s) in the group. In some embodiments, where a single contact is associated with the application(s), the name of the contact is used as opposed to another identifier.

In some embodiments, the associations may be stored in volatile memory. In this embodiment, the associations may be stored when created and deleted at vehicle key-off. Thus, the vehicle user associates vehicle applications and contacts each time the vehicle is used or the associations are desired to be used. In other embodiments, the associations may be stored in non-volatile memory. The vehicle user may access previously created/stored associations from a menu or list of previously created associations so that the same associations do not need to be recreated each time the associations are desired to be used. In some embodiments, a limited set of previously created associations may be stored. Each new association created may be stored in memory on a first in, first out basis (e.g., the oldest association is deleted).

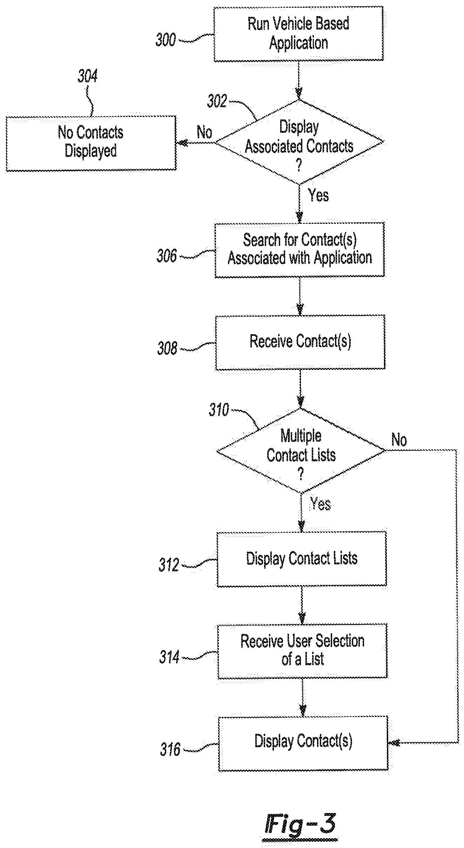

Figure 3 illustrates the operation for displaying an association, such as one or more contacts, associated with an executing application. A vehicle application may be executed on the head unit 104 (block 300). Vehicle applications may include, but are not limited to, navigation, a connected media player, email, telephone, SMS/text, and an embedded image viewer. A determination may be made whether any contacts are associated with the application(s) (or the application is tagged with contacts). Further, a determination may be made whether displaying the associated contacts has been instructed (block 302). A vehicle user may selectively choose whether to create the associations and/or when to display the previously stored associations. The user may use one or more oral and/or tactual inputs to selectively instruct the display of the one or more associated contacts.

If no contacts are associated with the application or the user does not instruct display of the associated contacts, no contacts are displayed (block 304). In this case, the vehicle user does not have the ability to perform one or more operation on the vehicle applications based on an association with one or more contacts. However, the vehicle user may instruct displaying the associated contacts at anytime (as described below).

After vehicle key on and creating the association between the vehicle application(s) and the contact(s) and/or after instructing display of associated contact(s), the logic on the head unit 104 determines that the contacts are to be displayed (block 302). The contact(s) that the user has associated with the application may be searched (block 306) in memory 108 and the selected contact or contact group received from memory 108 (block 308).

In some embodiments, multiple contacts lists may be stored in memory 148 and associated with the same vehicle application (block 310). As a non-limiting example, the vehicle user may create separate contact lists to associate with navigation. At times, each of the separate associated contacts or contact groups may be received from memory and the multiple contact lists may be displayed (block 312) for selection by the vehicle user. If there is a single contact list associated the application (block 310), the contacts are displayed during application use (block 316).

Where multiple contacts lists are associated with the same vehicle application, the vehicle user may select one of the previously created associations orally and/or tactually for display during use of the vehicle application (block 314). Upon selection, the single contact or group contact may be displayed during use of the vehicle application (block 316). The contact(s) may be displayed on or near the application's visual interface. Referring to the previous example, the selected contact list is displayed on or near the displayed route on the navigation display while the user continues to use the vehicle's navigation system. As another non-limiting example, the contacts are displayed on or near the graphical display of a playlist being played via the VCS 102. Further details of user capabilities through associating contacts to one or more vehicle applications and displaying the contacts during application use are described below with respect to Figure 5.

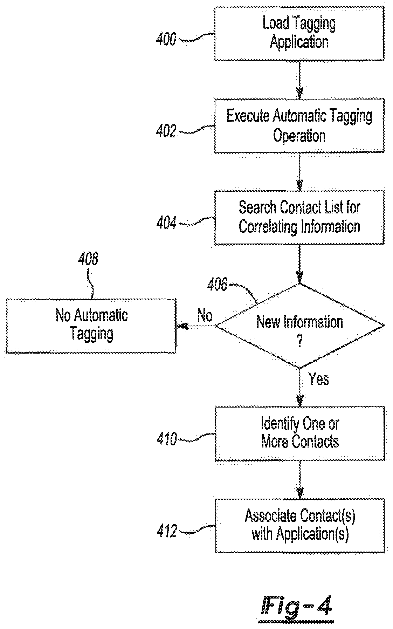

Figure 4 illustrates a process for automatically associating contacts and one or more vehicle applications. The client application is executed on the head unit 104 (block 400). In some embodiment, the user may execute an automatic tagging operation on the client application (block 402).

Automatic tagging of contacts with applications enables a seamless association between the contacts and applications. The automatic association may be accomplished by identifying one or more correlations between information used to execute one or more vehicle applications/functions and the vehicle user's contacts (block 404). Correlating information may include, but are not limited to, a contact name, address, email, and/or a phone number. As a non-limiting example, any contacts in the vehicle user's set of contacts that include an address may be associated with navigation. If the profile information also includes one or more email addresses and/or one or more telephone numbers, the client application may also associate the contact with an email function and/or a telephone function.

In some cases, the contact's profile information may also include photos of the contact stored on the head unit 104 or the contact's playlists stored on the head unit 104. The photos and playlists may be manually tagged/associated by the vehicle user to associate the contact with the photos and playlists. Thus, the client application may be programmed with additional instructions for tagging or associating photos and/or playlists stored in memory 108 with contacts. Based on this association, an image viewer on the head unit 104 or a media player application can be associated with the contact(s) as described throughout this description. Additionally or alternatively, the photos and/or playlists may be downloaded and stored via an Internet connection from a system remote from the vehicle, such as an Internet radio application and/or a social networking site. If the playlist and/or photos are downloaded from the contact's user page or site, an automatic association may be made between the photos or playlist and the contact based on the existence of the contact in the vehicle's user set of contacts and the downloaded information being retrieved from the contact's user page.

Each contact in the vehicle user's set of contacts can be associated with one or more vehicle applications. The vehicle user may select which applications to associate with the contacts. However, not all applications are associated with each contact. One contact may be associated with fewer or more applications than another contact. Of course, some contacts may share the same number of applications associations as another. Contacts may not be associated with certain applications because correlating information may not be available in the contact's profile information.

Continuing with the process for automatic tagging, a determination may be made whether new information exists in the contact list (block 406). New information may include, but is not limited to, new contacts and updated information in existing contacts. The updated information may be information which triggers additional application associations with the contact and/or removal of one or more application associations. If no new information exists, no automatic tagging occurs (block 408).

If new information exists (block 406), the client application identifies new or updated contact(s) (block 410). Based on correlating information for the new contact(s) and/or correlating updated information in existing contacts, these contacts may be associated with one or more vehicle applications (or one or more additional applications) (block 412). The associations are created and stored in memory 108 with a linking identifier as described above. Once the associations are created, the contacts and associated applications may be displayed as described in Figure 3.

In some embodiments, a message may be output to the vehicle user enabling the vehicle user to execute one or more applications associated with one or more contacts. For example, if the vehicle user communicates with a contact (via email, phone or text), the client application may transmit a message to the vehicle user enabling navigation to the contact (based on the address associated with the contact). In some embodiments, the location of the contact may be determined by the client application based on a GPS location of the contact as determined from the contact's location broadcasting device (such as a mobile phone). In some embodiments, the location may be determined by and received from third-party location sensing tools communicating with the client application. The message may be output via the VCS 102 after the communication terminates (e.g., phone call or email is sent).

Contacts can also be associated with one or more applications regardless of whether the executed operation of the vehicle application has a correlation with the contact such as a name, phone number, email address, or physical address. As a non-limiting example, one or more contacts may be associated with the media player while a vehicle driver's own playlist is being played. As another non-limiting example, one or more contacts may be associated with navigation regardless of the final destination. For example, the vehicle user can follow a route calculated by the navigation system to a restaurant where the user is meeting friends for dinner and

Figure 5 is a process for selecting and executing one or more applications having an association, such as one or more contacts in a contact list, used for executing one or more vehicle applications. The selection and execution of the one or more applications may occur while another application is loaded and executing. Further, the desired application can be retrieved and selected while continuing to display the currently running application. In some embodiments, execution of the desired application may change the display of the running application.

A user selection of an association (shown as a non-limiting example in Figure 5 as a contact or contact group) associated with one or more applications may be received at the head unit 104 by the client application (block 500). The contact(s) may or may not be associated with multiple applications (block 502). If there is only a single application associated with the contact(s), the associated application may be executed (block 504). In some embodiments, a default vehicle application may be associated with each contact such as a communication application (e.g., phone).

If there are multiple applications, the multiple applications may be output on the display 110 (block 506). A user selection of at least one application may be received orally and/or tactually (block 508). In some embodiments, if the vehicle is moving, certain applications may not be accessible. For example, the user may not be able to select the image viewer.

Upon selection of the desired application(s), the application(s) may be executed (block 510). For example, while the user is communicating with a contact on the phone, the user may also be routed to the contact's location by selecting navigation from the menu of applications associated with the contact. Further, if the vehicle user manually associates one or more other contacts with the navigation, applications associated with other contacts may be executed in response to a selection of applications associated with the other contacts. For example, while continuing to be routed to the contact's location, the vehicle user may select a texting function to text one or more other contacts and/or select the media player function to listen to the another contact's playlist.

When an application is selected for execution, the client application on the head unit 104 may transmit instructions over a vehicle network for receipt by the one or more vehicle applications to execute. The instructions include information for executing the application. For example, to execute a playlist on a media player, the instructions may include information identifying the playlist to be played. As another example, the instructions may include the contact's location information to be routed to the contact. As other non-limiting example, the instructions may include a telephone number of the contact to make a call to the contact or text the contact, an email address to email the contact, and/or information to enable viewing of photos.

For some applications, the display 110 may be changed in order to display the executed application (block 512). Depending on the application, the display may or may not be needed which may be determined based on priority of the application. For example, navigation may have a higher priority than the telephone function. In some embodiments, use of the display may also be determined on whether the vehicle is moving. If so, then certain functions such as an email function, a texting function, an image viewer, and the like may be given the lowest priority.

If the display is not, cannot, or does not need to be used for the newly selected application, the display of the currently executing application is maintained (block 514). Otherwise, the display may be changed depending on the application and its priority (block 516). If the display will be changed, the vehicle user may be notified that the display will be changed.

In some embodiments, the display may be a dual screen in which applications may be shown together. In this case, if one application is executing, a later application selected for execution may be shown on a second screen.

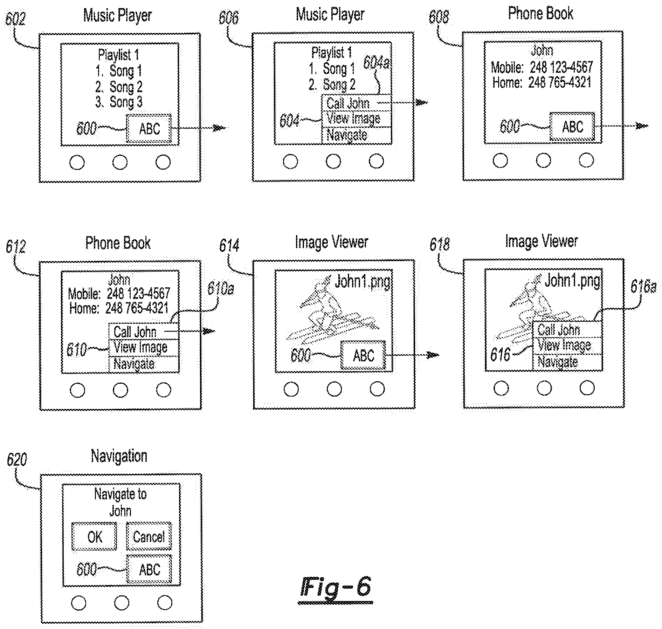

Figure 6 shows screen displays of associated vehicle applications and selection of one or more applications for execution on a communication device 104. In the non-limiting example shown in Figure 6, the association is the user's contact "John." As shown in Figure 6, the selectable button 600 displays the association (or tag) and is named "ABC." In some embodiments, the association may be automatically named "John" for the contact that is associated with the one or more vehicle applications.

In the first display 602, a media player application and the playlist playing on the media player is shown. The playlist may be a playlist created by John and downloaded from an Internet service, such as an internet radio service, to the device 104. Alternatively, the playlist can be any playlist associated with John. The selectable button 600 may be selected to view and select other vehicle applications associated with the executing vehicle application (e.g., the media player). Alternatively, a user may orally instruct viewing and selection of the other vehicle applications. Upon selection of selectable button 600, one or more vehicle applications associated with the executing application (e.g., the media player) may be displayed in window 604. The window 604 may be placed anywhere on the display according to the specific implementation of the invention without departing from the scope of the various embodiments of the invention.

As shown in screen display 606, the phone application 604a may be selected to "call John." Upon selection of selectable button 604a, one or more phone numbers for John may be displayed as shown on screen display 608. In some embodiments, a call may be made directly upon selection of selectable button 604a. The tag 600 "ABC" is shown on screen display 608. Upon selection of selectable button 600, window 610 is displayed as shown in screen display 612. Comparing the content of window 604 and window 610, the menu of applications for selection by the user may be different depending on the application that is executing, although all applications (executing and non-executing) share an association or tag. While the music player is executing (displays 606), the phone application 604a is an item in window 604. While the phone application is executing (display 612), the playlist or media player is an item in window 610. Of course the arrangement of windows 604 and 610 are non-limiting and may be arranged in any order without departing from the scope of the various embodiments of the invention.

From display 612, another vehicle application, such as an image viewer 610a, may be selected and, upon selection, the image viewer is executed as shown in display 614. In this non-limiting example, the user may view an image of John. Additionally, the tag 600 is displayed on screen display 614. Upon selection of tag 600, window 616 is displayed as shown in screen display 618. Again, the content of window 618 differs from the content of windows 604 and 610. As one non-limiting example, while the image viewer is executing (display 618), the phone application 616a is an item in window 616. While the phone application is executing (display 612), the image viewer 610a is an item in window 610. Again, the arrangement of the windows is non-limiting and may be arranged in any order without departing from the scope of the various embodiments of the invention.

As shown in display 620, the navigation application is displayed upon selection of the navigation application from window 616. For brevity, reference is made to the above description for details of the process of selecting one or more vehicle applications for execution from display 620.

While exemplary embodiments are described above, it is not intended that these embodiments describe all possible forms of the invention. Rather, the words used in the specification are words of description rather than limitation.

## Claims

1. A system for executing one or more functions on a vehicle computing system (VCS), the system comprising:
at least one vehicle computing system (VCS) configured to:
receive input associating one or more functions in a vehicle with at least one of one or more contacts or one or more other vehicle functions in order to select the one or more vehicle functions for execution;
associate the one or more vehicle functions with at least one of the one or more contacts or the one or more other vehicle functions based on the input;
display the one or more vehicle functions which are associated with the one or more contacts or with the one or more other vehicle functions;
receive a selection of the one or more vehicle functions which are associated with at least one of the one or more contacts or the one or more other vehicle functions;
execute the one or more vehicle functions in response to the selection while an application associated with the one or more contacts or the one or more other vehicle functions is running on the at least one vehicle computing system (VCS); and
upon execution of the one or more vehicle functions, display the one or more contacts or the one or more other vehicle functions associated with the executing vehicle function.

2. The system of claim 1 wherein the at least one vehicle computing system (VCS) is a vehicle head unit (104).

3. The system of claim 1 wherein the at least one vehicle computing system (VCS) is configured to store one or more associations between the one or more vehicle functions and at least one of the one or more contacts or the one or more other vehicle functions, wherein the vehicle computing system (VCS) configured to display is configured to display the one or more stored associations and the selection of the one or more vehicle functions is from the one or more stored associations.

4. The system of claim 1 wherein the display is in response to a selection of a selectable button (600) in communication with a head unit display (110).

5. The system of claim 1 wherein the vehicle computing system (VCS) is further configured to:
store an identifier for an association between the one or more vehicle functions and the one or more contacts or the one or more other vehicle functions; and
display the identifier.

6. The system of claim 5 wherein the identifier is displayed on or near a selectable button (600) of the vehicle computing system (VCS), wherein the vehicle computing system (VCS) is further configured to display the one or more contacts or the one or more vehicle functions in response to a user selection of the selectable button (600).

7. The system of claim 1 wherein the one or more vehicle functions include an image viewer, navigation, a media player, electronic mail, phone, or text messaging.

8. A computer-implemented method for selecting one or more vehicle functions for execution in a vehicle, the computer-implemented method comprising:
displaying at a vehicle computing system (VCS) one or more vehicle functions having an association with one or more contacts or one or more other vehicle functions, the association being made based on an input associating one or more functions in a vehicle with at least one of one or more contacts or one or more other vehicle functions;
receiving input at the vehicle computing system (VCS) selecting the one or more vehicle functions having the association;
executing at the vehicle computing system (VCS) the one or more vehicle functions in response to the input while an application associated with the one or more contacts or the one or more other vehicle functions is running on the vehicle computing system (VCS); and
upon execution of the one or more vehicle functions, displaying the one or more contacts or the one or more other vehicle functions associated with the executing vehicle function.

9. The computer-implemented method of claim 8 further comprising concurrently displaying the one or more vehicle functions and receiving the input at the vehicle computing system (VCS) while the one or more vehicle functions are executing.

10. The computer-implemented method of claim 8 or 9 further comprising concurrently executing at the vehicle computing system (VCS) two or more vehicle functions in response to the input.

11. The computer-implemented method of claim 8 further comprising:
receiving oral or tactual input at the vehicle computing system (VCS) associating the one or more vehicle functions with at least one of the one or more contacts or the one or more other vehicle functions in order to select the one or more vehicle functions for execution; and
associating at the vehicle computing system (VCS) the one or more vehicle functions with the one or more contacts or the one or more other vehicle functions based on the input.

12. The computer-implemented method of any of claims 8-11 wherein the association is between the one or more vehicle functions and any of the other one or more vehicle functions in the vehicle, between the one or more contacts and any number of the one or more vehicle functions or between a contact and two or more vehicle functions.

13. The computer-implemented method of any of claims 8-12 wherein the executing vehicle function is a telephone call with a contact, the method further comprising after terminating the telephone call, automatically outputting a message with respect to executing the one or more other vehicle functions associated with the telephone function and to the contact.

14. The computer-implemented method of claim 14 wherein the one or more other vehicle functions include navigating to the contact, playing the contact's playlist, viewing images of the contact, emailing the contact, or text messaging the contact.

## Patentansprüche

1. System zum Ausführen einer oder mehrerer Funktionen an einem Fahrzeugrechensystem (VCS), wobei das System Folgendes umfasst:
zumindest ein Fahrzeugrechensystem (VCS), das für Folgendes konfiguriert ist:
Empfangen einer Eingabe, die eine oder mehrere Funktionen in einem Fahrzeug mit zumindest einem von einem oder mehreren Kontakten oder einer oder mehreren anderen Fahrzeugfunktionen verbindet, um die eine oder mehreren Fahrzeugfunktionen zur Ausführung auszuwählen;
Verbinden der einen oder mehreren Fahrzeugfunktionen mit zumindest einem von dem einen oder den mehreren Kontakten oder der einen oder den mehreren anderen Fahrzeugfunktionen auf Grundlage der Eingabe;
Anzeigen der einen oder mehreren Fahrzeugfunktionen, die mit dem einen oder den mehreren Kontakten oder mit der einen oder den mehreren anderen Fahrzeugfunktionen verbunden sind;
Empfangen einer Auswahl der einen oder mehreren Fahrzeugfunktionen, die mit zumindest einem von dem einen oder den mehreren Kontakten oder der einen oder den mehreren anderen Fahrzeugfunktionen verbunden sind;
Ausführen der einen oder mehreren Fahrzeugfunktionen als Reaktion auf die Auswahl, während eine Anwendung in Verbindung mit dem einen oder den mehreren Kontakten oder der einen oder den mehreren anderen Fahrzeugfunktionen auf dem zumindest einen Fahrzeugrechensystem (VCS) läuft; und
Anzeigen des einen oder der mehreren Kontakte oder der einen oder mehreren anderen Fahrzeugfunktionen in Verbindung mit der ausführenden Fahrzeugfunktion bei Ausführung der einen oder mehreren Fahrzeugfunktionen.

2. System nach Anspruch 1, wobei das zumindest eine Fahrzeugrechensystem (VCS) eine Fahrzeugkopfeinheit (104) ist.

3. System nach Anspruch 1, wobei das zumindest eine Fahrzeugrechensystem (VCS) konfiguriert ist, um eine oder mehrere Verbindungen zwischen der einen oder den mehreren Fahrzeugfunktionen und zumindest einem von dem einen oder den mehreren Kontakten oder der einen oder den mehreren anderen Fahrzeugfunktionen zu speichern, wobei das Fahrzeugrechensystem (VCS) konfiguriert ist, um die eine oder mehreren gespeicherten Verbindungen anzuzeigen und die Auswahl der einen oder mehreren Fahrzeugfunktionen von der einen oder den mehreren gespeicherten Verbindungen ist.

4. System nach Anspruch 1, wobei die Anzeige als Reaktion auf eine Auswahl einer auswählbaren Schaltfläche (600) in Kommunikation mit einer Kopfanzeigeeinheit (110) erfolgt.

5. System nach Anspruch 1, wobei das Fahrzeugrechensystem (VCS) ferner für Folgendes konfiguriert ist:
Speichern einer Kennung für eine Verbindung zwischen der einen oder den mehreren Fahrzeugfunktionen und dem einen oder den mehreren Kontakten oder der einen oder den mehreren anderen Fahrzeugfunktionen; und
Anzeigen der Kennung.

6. System nach Anspruch 5, wobei die Kennung an einer oder in der Nähe einer auswählbaren Schaltfläche (600) des Fahrzeugrechensystems (VCS) angezeigt wird, wobei das Fahrzeugrechensystem (VCS) ferner konfiguriert ist, um den einen oder die mehreren Kontakte oder die eine oder mehreren Fahrzeugfunktionen als Reaktion auf eine Benutzerauswahl der auswählbaren Schaltfläche (600) anzuzeigen.

7. System nach Anspruch 1, wobei die eine oder mehreren Fahrzeugfunktionen eine Bildanzeige, Navigation, einen Media Player, elektronische Post, Telefon oder Textnachrichten beinhalten.

8. Computerimplementiertes Verfahren zum Auswählen einer oder mehrerer Fahrzeugfunktionen zur Ausführung in einem Fahrzeug, wobei das computerimplementierte Verfahren Folgendes umfasst:
Anzeigen, an einem Fahrzeugrechensystem (VCS), von einer oder mehreren Fahrzeugfunktionen, die eine Verbindung mit einem oder mehreren Kontakten oder einer oder mehreren anderen Fahrzeugfunktionen aufweisen, wobei die Verbindung auf Grundlage einer Eingabe erfolgt, die eine oder mehrere Funktionen in einem Fahrzeug mit zumindest einem von einem oder mehreren Kontakten oder einer oder mehreren anderen Fahrzeugfunktionen verbindet;
Empfangen einer Eingabe an dem Fahrzeugrechensystem (VCS), die die eine oder mehreren Fahrzeugfunktionen auswählt, die die Verbindung aufweisen;
Ausführen der einen oder mehreren Fahrzeugfunktionen an dem Fahrzeugrechensystem (VCS) als Reaktion auf die Eingabe, während eine Anwendung in Verbindung mit dem einen oder den mehreren Kontakten oder der einen oder den mehreren anderen Fahrzeugfunktionen auf dem Fahrzeugrechensystem (VCS) läuft; und
Anzeigen des einen oder der mehreren Kontakte oder der einen oder mehreren anderen Fahrzeugfunktionen in Verbindung mit der ausführenden Fahrzeugfunktion bei Ausführung der einen oder mehreren Fahrzeugfunktionen.

9. Computerimplementiertes Verfahren nach Anspruch 8, ferner umfassend das gleichzeitige Anzeigen der einen oder mehreren Fahrzeugfunktionen und Empfangen der Eingabe an dem Fahrzeugrechensystem (VCS), während die eine oder mehreren Fahrzeugfunktionen ausgeführt werden.

10. Computerimplementiertes Verfahren nach Anspruch 8 oder 9, ferner umfassend das gleichzeitige Ausführung von zwei oder mehr Fahrzeugfunktionen an dem Fahrzeugrechensystem (VCS) als Reaktion auf die Eingabe.

11. Computerimplementiertes Verfahren nach Anspruch 8, ferner umfassend:
Empfangen einer mündlichen oder taktilen Eingabe an dem Fahrzeugrechensystem (VCS), die die eine oder mehreren Fahrzeugfunktionen mit zumindest einem von dem einen oder den mehreren Kontakten oder der einen oder den mehreren anderen Fahrzeugfunktionen verbindet, um die eine oder mehreren Fahrzeugfunktionen zur Ausführung auszuwählen; und
Verbinden, an dem Fahrzeugrechensystem (VCS), der einen oder mehreren Fahrzeugfunktionen mit dem einen oder den mehreren Kontakten oder der einen oder den mehreren anderen Fahrzeugfunktionen auf Grundlage der Eingabe.

12. Computerimplementiertes Verfahren nach einem der Ansprüche 8-11, wobei die Verbindung zwischen der einen oder den mehreren Fahrzeugfunktionen und beliebigen der anderen einen oder mehreren Fahrzeugfunktionen in dem Fahrzeug, zwischen dem einen oder den mehreren Kontakten und einer beliebigen Anzahl der einen oder mehreren Fahrzeugfunktionen oder zwischen einem Kontakt und zwei oder mehreren Fahrzeugfunktionen ist.

13. Computerimplementiertes Verfahren nach einem der Ansprüche 8-12, wobei die ausführende Fahrzeugfunktion ein Telefonanruf bei einem Kontakt ist, wobei das Verfahren nach dem Beenden des Telefonanrufs ferner das automatische Ausgeben einer Nachricht in Bezug auf die Ausführung der einen oder mehreren anderen Fahrzeugfunktionen in Verbindung mit der Telefonfunktion und an den Kontakt umfasst.

14. Computerimplementiertes Verfahren nach Anspruch 14, wobei die eine oder mehreren anderen Fahrzeugfunktionen Navigieren zu dem Kontakt, Abspielen der Playlist des Kontakts, Anzeigen von Bildern des Kontakts, Senden einer E-Mail an den Kontakt oder Senden einer Textnachricht an den Kontakt beinhalten.

## Revendications

1. Système pour exécuter une ou plusieurs fonctions sur un système informatique de véhicule (VCS), le système comprenant :
au moins un système informatique de véhicule (VCS) configuré pour :
recevoir une entrée associant une ou plusieurs fonctions d'un véhicule à au moins l'un d'un ou de plusieurs contacts ou d'une ou de plusieurs autres fonctions du véhicule afin de sélectionner les une ou plusieurs fonctions du véhicule à exécuter ;
associer les une ou plusieurs fonctions du véhicule à au moins l'un des un ou plusieurs contacts ou des une ou plusieurs fonctions du véhicule sur la base de l'entrée ;
afficher les une ou plusieurs fonctions du véhicule associées aux un ou plusieurs contacts ou aux une ou plusieurs autres fonctions du véhicule ;
recevoir une sélection des une ou plusieurs fonctions du véhicule associées à au moins l'un des un ou plusieurs contacts ou des une ou plusieurs autres fonctions du véhicule ;
exécuter les une ou plusieurs fonctions du véhicule en réponse à la sélection, pendant qu'une application associée aux un ou plusieurs contacts ou aux une ou plusieurs autres fonctions du véhicule s'exécute sur l'au moins un système informatique de véhicule (VCS) ; et
lors de l'exécution des une ou plusieurs fonctions du véhicule, afficher les un ou plusieurs contacts ou les une ou plusieurs autres fonctions du véhicule associées à la fonction du véhicule exécutée.

2. Système selon la revendication 1, dans lequel l'au moins un système informatique de véhicule (VCS) est une unité de tête de véhicule (104).

3. Système selon la revendication 1, dans lequel l'au moins un système informatique de véhicule (VCS) est configuré pour stocker une ou plusieurs associations entre les une ou plusieurs fonctions du véhicule et au moins l'un des un ou plusieurs contacts ou des une ou plusieurs autres fonctions du véhicule, dans lequel le système informatique de véhicule (VCS) configuré pour afficher est configuré pour afficher les une ou plusieurs associations stockées et la sélection des une ou plusieurs fonctions du véhicule s'effectue à partir des une ou plusieurs associations stockées.

4. Système selon la revendication 1, dans lequel l'affichage s'effectue en réponse à une sélection d'un bouton sélectionnable (600) en communication avec un écran d'unité de tête (110).

5. Système selon la revendication 1, dans lequel le système informatique de véhicule (VCS) est en outre configuré pour :
stocker un identifiant pour une association entre les une ou plusieurs fonctions du véhicule et les un ou plusieurs contacts ou les une ou plusieurs autres fonctions du véhicule ; et
afficher l'identifiant.

6. Système selon la revendication 5, dans lequel l'identifiant est affiché sur ou près d'un bouton sélectionnable (600) du système informatique de véhicule (VCS), dans lequel le système informatique de véhicule (VCS) est en outre configuré pour afficher les un ou plusieurs contacts ou les une ou plusieurs fonctions du véhicule en réponse à une sélection du bouton sélectionnable (600) par l'utilisateur.

7. Système selon la revendication 1, dans lequel les une ou plusieurs fonctions du véhicule comprennent une visionneuse d'images, une navigation, un lecteur multimédia, un service de courrier électronique, un téléphone ou une messagerie texte.

8. Procédé mis en oeuvre par ordinateur pour sélectionner une ou plusieurs fonctions du véhicule à exécuter dans un véhicule, le procédé mis en oeuvre par ordinateur comprenant :
l'affichage sur un système informatique de véhicule (VCS) d'une ou de plusieurs fonctions du véhicule associées à un ou à plusieurs contacts ou à une ou à plusieurs autres fonctions du véhicule, l'association étant réalisée sur la base d'une entrée associant une ou plusieurs fonctions d'un véhicule à au moins l'un d'un ou de plusieurs contacts ou d'une ou de plusieurs autres fonctions du véhicule ;
la réception dans le système informatique de véhicule (VCS) d'une entrée sélectionnant les une ou plusieurs fonctions du véhicule présentant l'association ;
l'exécution dans le système informatique de véhicule (VCS) des une ou plusieurs fonctions du véhicule en réponse à l'entrée, pendant qu'une application associée aux un ou plusieurs contacts ou aux une ou plusieurs autres fonctions du véhicule s'exécute dans le système informatique de véhicule (VCS) ; et
lors de l'exécution des une ou plusieurs fonctions du véhicule, l'affichage des un ou plusieurs contacts ou des une ou plusieurs autres fonctions du véhicule associées à la fonction du véhicule exécutée.

9. Procédé mis en oeuvre par ordinateur selon la revendication 8, comprenant en outre l'affichage simultané des une ou plusieurs fonctions du véhicule et la réception de l'entrée dans le système informatique du véhicule (VCS) pendant l'exécution des une ou plusieurs fonctions du véhicule.

10. Procédé mis en oeuvre par ordinateur selon la revendication 8 ou 9, comprenant l'exécution simultanée dans le système informatique du véhicule (VCS) de deux fonctions du véhicule ou plus en réponse à l'entrée.

11. Procédé mis en oeuvre par ordinateur selon la revendication 8, comprenant en outre :
la réception dans le système informatique de véhicule (VCS) d'une entrée vocale ou tactile associant les une ou plusieurs fonctions du véhicule à au moins l'un des un ou plusieurs contacts ou des une ou plusieurs autres fonctions du véhicule afin de sélectionner les une ou plusieurs fonctions du véhicule à exécuter ; et
l'association dans le système informatique de véhicule (VCS) des une ou plusieurs fonctions du véhicule aux un ou plusieurs contacts ou aux une ou plusieurs autres fonctions du véhicule sur la base de l'entrée.

12. Procédé mis en oeuvre par ordinateur selon l'une quelconque des revendications 8 à 11, dans lequel l'association s'effectue entre les une ou plusieurs fonctions du véhicule et l'une quelconque des autres une ou plusieurs fonctions du véhicule dans le véhicule, entre les un ou plusieurs contacts et un nombre quelconque des une ou plusieurs fonctions du véhicule ou entre un contact et deux fonctions du véhicule ou plus.

13. Procédé mis en oeuvre par ordinateur selon l'une quelconque des revendications 8 à 12, dans lequel la fonction du véhicule qui s'exécute est un appel téléphonique avec un contact, le procédé comprenant en outre, après la fin de l'appel téléphonique, la génération automatique d'un message concernant l'exécution des une ou plusieurs autres fonctions du véhicule associées à la fonction téléphone et au contact.

14. Procédé mis en oeuvre par ordinateur selon la revendication 14, dans lequel les une ou plusieurs autres fonctions du véhicule comprennent la navigation vers le contact, la lecture de la liste de lecture du contact, la visualisation d'images du contact, l'envoi d'un courrier électronique au contact ou l'envoi d'un message texte au contact.
